# EUROPEAN PATENT SPECIFICATION

(11) **EP 2 352 604 B1**
(45) Date of publication and mention of the grant of the patent: **20.04.2016**
(21) Application number: 09825056.6
(22) Date of filing: 20.10.2009
(51) Int. Cl.: B21D 5/02, G01B 11/26

(54) **METHOD AND APPARATUS FOR MEASURING ANGLE OF A BEND**
VERFAHREN VORRICHTUNG ZUR MESSUNG EINES BIEGEWINKELS
PROCEDE ET DISPOSITF DE MESURE D'UN ANGLE DE PLIAGE

(30) Priority: 04.11.2008 SE 0802343
(43) Date of publication of application: 10.08.2011
(73) Proprietor: Ursviken Technology AB, 932 82 Ursviken (SE)
(72) Inventor: RÖNNMARK, Ulf, S-931 46 Skellefteå (SE); CARLSSON, Johannes, S-931 41 Skellefteå (SE)
(74) Representative: Zacco Sweden AB
(86) International application number: PCT/SE2009/051194
(87) International publication number: WO 2010/053428

(56) References cited:
- EP-A1- 1 102 032
- EP-A1- 1 127 633
- EP-A2- 0 352 097
- JP-A- 2004 330 201
- US-A- 4 354 374
- US-B1- 6 189 364

## Description

The present invention concerns a method and an arrangement for measuring angles along the complete length of a workpiece during bending of the workpiece to a predetermined angle in a press brake, according to the preamble of claims 1, and 5 respectively

A press brake or similar bending arrangement is often used when workpieces in the form of plates or sheets of metal are to be bent in order to achieve a profile that has an angle between at least two parts of the extent of the workpiece. The sheet is bent in a unit that comprises a lower part on which the workpiece rests, also known as the "pressure table" or "pressure pad", and a moveable die that can be displaced in the direction towards the pressure table. The pressure table is supported at its ends and demonstrates an opening known as the "pad opening" into which the moveable die is pressed when the sheet is to be bent. The moveable die can be displaced in the direction towards the pressure table with the aid of displacement means in the form of for example, hydraulic cylinders arranged at its ends. The force with which the moveable die is displaced depends on several parameters, such as the sheet thickness, its quality, and the depth of the pressure. This force is large, and it often leads to at least one of the pressure table and moveable die becoming bent. The curvature is greatest at the centre of the length of the pressure table, and it increases with the length of the press brake. This curvature in turn entails the angle of the bent workpiece deviating from the intended angle, since the depth of pressure is not equal along the complete length of the workpiece. Measurement of the deviation of the workpiece can be carried out manually, using various types of mechanical measurement arrangements that are placed in contact with the workpiece, or using measurement arrangements that do not make contact with the workpiece.

The pressure table is often equipped with adjustment arrangements in order to compensate for this curvature. These arrangements allow the curvature of the table, known as its "camber", to be adjusted. The adjustment can be achieved in a number of different ways, but it is normally achieved with the aid of wedges that can be displaced. One example of this is shown in US 6,189,364, in which the moveable die is adjusted following measured angular values that have been obtained from a measurement when the die has been removed from the workpiece. The moveable die is displaced with the aid of at least three drive means, one at each end of the die and one at its centre. The measurement of angle occurs with measurement equipment that comprises three pairs of measurement heads located on opposing sides of the pressure table and directed towards the workpiece, of which two pairs of measurement heads can be displaced along the pressure table in a manner that depends on the length of the workpiece. The measurement is carried out at the two ends and at the centre of the workpiece, since the pressure table is maximally bent at locations farthest from the supports.

This type of measurement, however, suffers from the disadvantage that consideration is taken only of the curvature that takes place as a result of the force. This force gives an even curve to the curvature. The force may, however, affect the workpiece unevenly along the length of the bend, as a result of irregularities in the quality of the sheet of the workpiece or of deviations in its thickness. Furthermore, manual setting of one pair of the measurement heads that are located at one end of the workpiece is required if a workpiece that is shorter than the length of the press brake is to be bent.

Another example is shown in EP0352097 which describes a press-brake comprising a lower die and an upper die moveable and driveable to the lower die and having least one workpiece measuring means provided with the lower die.

One purpose of the present invention is to achieve a measurement arrangement that solves these problems.

This aim is achieved by a method and by a measurement arrangement with the features of claims 1 and 5 respectively. Claim 11 relates to a press brake comprising an arrangement according to the invention. The dependent claims define preferred embodiments of the invention.

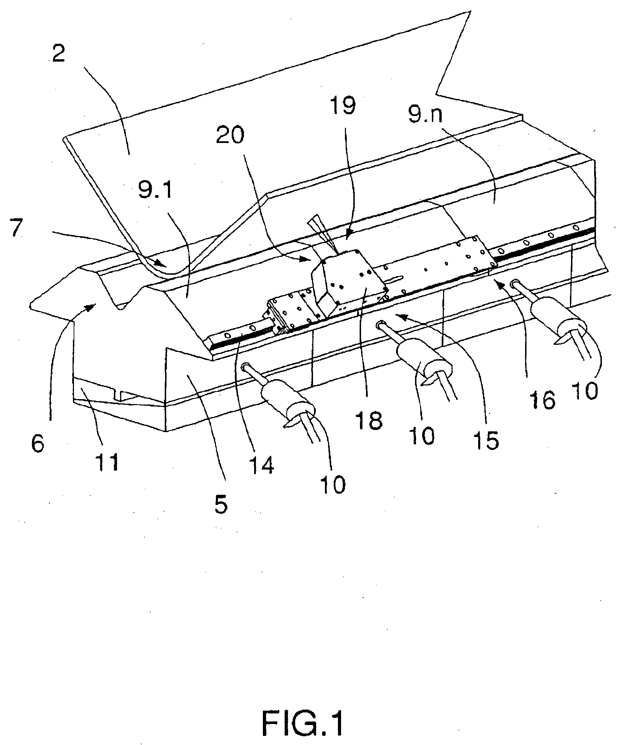

The invention will be described below with reference to the attached drawings, in which
Figure 1 shows a detailed view of an adjustment arrangement and a measurement arrangement in a position for the measurement of a workpiece that has been bent between a pressure table and a moveable die,

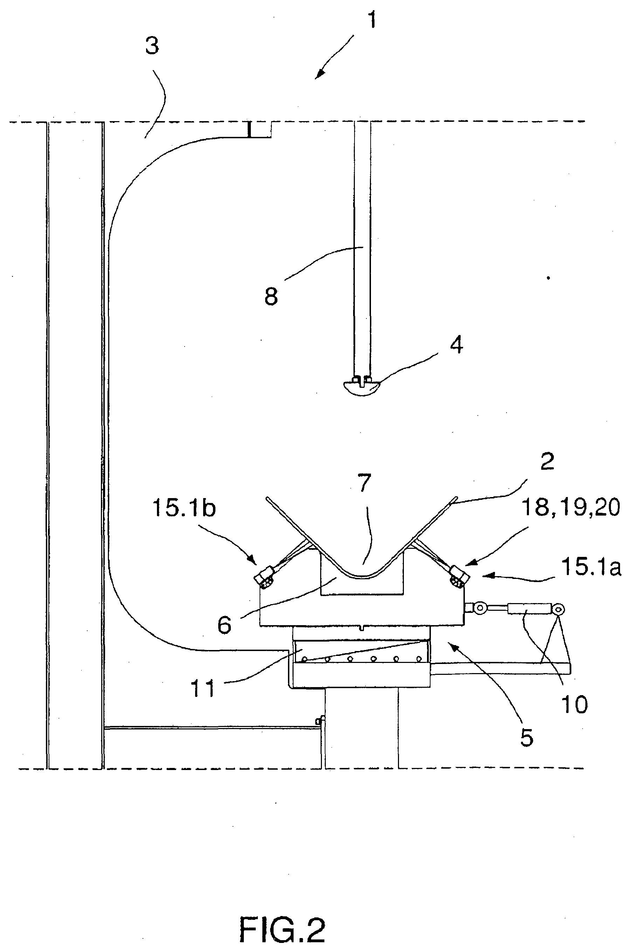

Figure 2 shows a press brake from the side with the measurement arrangement arranged at the pressure table,

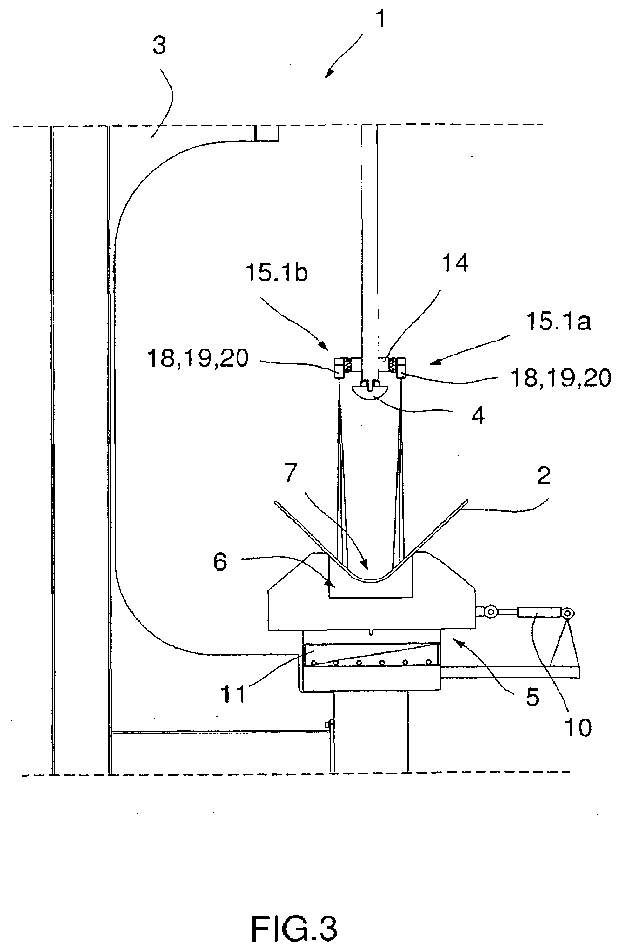

Figure 3 shows a press brake from the side with the measurement arrangement arranged at the moveable die,

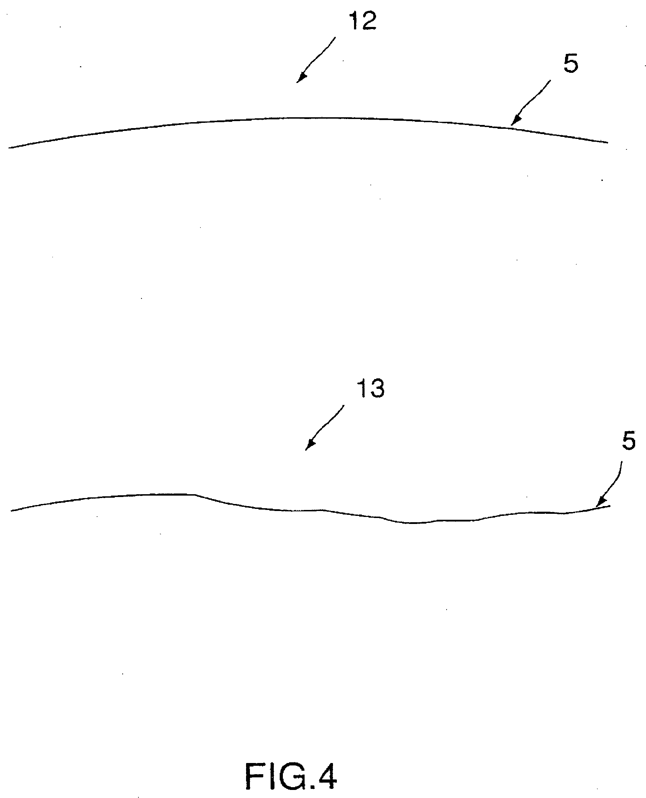

Figure 4 shows graphically various curves at the pressure table following adjustment, and
Figure 5 shows an alternative embodiment with two measurement arrangements arranged one after the other.

The press brake 1 shown in the drawings in intended to be used for the bending of a work piece 2 and it comprises in a known manner a mounting frame 3 on to which a movable die 4 is mounted. The movable die 4 can be displaced in a direction towards a pressure table 5, in the form of a counterpiece or pad, on which the workpiece 2 has been placed. The pressure table 5 is arranged to have an opening 6 that runs parallel to the moveable die 4. The moveable die 4 is intended to be displaced into the said opening 6 in order to achieve a fold 7 in the workpiece 2. A pair of displacement means 8 are arranged at the mounting frame 3, with which means it is intended that the displacement of the moveable die 4 is to be carried out. The displacement means 8 comprises in one preferred embodiment hydraulic cylinders, but it should be realised that also other displacement means may be used, for example electrical motors or pneumatic cylinders.

The pressure table 5 comprises a number of sections 9.1-9.n that can be mutually displaced in a direction towards or away from the moveable die 4. Each section 9.1-9.n can be individually adjusted with the aid of adjustment means 10, which in this embodiment are hydraulic cylinders. The hydraulic cylinders comprise a cylinder with a piston to which a piston rod has been attached and united with each section 9.1-9-n, and they displace the section by the piston rod that is a component of the hydraulic cylinder being protruded from the cylinder. The sections 9.1-9.n rest on wedge-formed elements 11, whereby a displacement of the section entails displacement of the section in the direction towards or away from the pressure table 5. It should be realised that also other types of adjustment arrangements are possible, for example jointed links that can displace the sections. The individual adjustment and the division into sections make it possible for the pressure table 5 to take on different shapes, from one even curve 12 with one peak or trough to a curve 13 with several peaks and troughs.

Guides 14 or rails are arranged along the pressure table 5 on the two sides of the pressure table 5, relative to the moveable die 4. The guides 14 extend along the complete length of the pressure table 5. At least one measurement arrangement 15 is arranged at each guide 14, which measurement arrangement is arranged such that it can be displaced along the complete length of the guide 14 in a controlled manner. The displacement takes place with the aid of a displacement unit 16 in the form of a motor, which may be electric, pneumatic or hydraulic, arranged at each of the measurement arrangements and provided with a drive means 17, in the form of, for example, a driving wheel. The driving wheel makes contact with the guide 14 and displaces the measurement arrangement 15 when the motor is driven. The displacement unit may, in another embodiment, comprise a belt drive, driven with the aid of, for example, a cogged belt.

The measurement arrangement 15 comprises a measurement head 18 with a source of light 19 and an image recorder 20. The source of light 19 comprises in this embodiment a laser, but it should be realised that other types of light source can be used, for example a source of infra-red light. The source of light 19 illuminates the profile of the workpiece 2 on both sides of the moveable die 4. In an alternative embodiment, the measurement arrangement 15 comprises a mechanical angle measuring device (not shown in the drawings) that determines mechanically the angles at the workpiece at selected locations.

In another embodiment the measurement arrangements 15 are located such that the profile of the workpiece 2 is determined from the point of view of the moveable die 4. The purpose of this is to facilitate the measurement if the design of the pressure table 5 and the peripheral equipment mounted on it do not allow measurement from the pressure table 5. The guides 14.1, 14.2 along which the measurement arrangements 15.1, 15.2 run are located in connection with the moveable die 4: it is an advantage if they are attached to the moveable die such that the measurement arrangements 15.1, 15.2 follow the motion of the moveable die 4.

The image recorder 20 comprises a camera, which takes images of the illuminated part of the workpiece 2 that is illuminated by the source of light 19. The image information is transferred to a processing unit that processes the measured angles at the workpiece 2.

The processing unit (not shown in the drawings) comprises a computer that determines with the aid of the transferred images the appearance of the curvatures of the pressure table 5 and the moveable die 4. The transferred images are converted into angular values. The appearance of the imaged profile, which is known as the "present value" of the angle of the workpiece 2, is compared with information that has been stored in the memory of the processing unit and compared with a desired target value. Signals are generated on the basis of these angular values, which signals are transmitted to a control unit that controls adjustment means 10, whereby the various sections are displaced along the wedge-shaped elements 11 of the pressure table 5, and one or several curves on the pressure table 5 are in this manner formed.

The target value in this case is constituted by the angular value that has been obtained from the centre of the length of the workpiece 2 after the first bending operation has been carried out and the moveable die 4 has been displaced sufficiently far away from the workpiece 2 for it to be possible for the workpiece 2 to spring back. The sections 9.1-9.n of the pressure table 5 are adjusted on the basis of the deviation of the present value from the target value such that the angles at the workpiece 2 are to obtain the desired target value during the subsequent bending operation. It should herewith be realised that the target value in another embodiment can be constituted by a measured value that has been obtained from another position along the workpiece 2.

The bending of the workpiece is carried out in two stages, in known manner. The first stage comprises a first displacement of the moveable die 4 into the opening 6 of the pressure table 5, whereby the workpiece 2 is bent for a first time. The pressure is released when a predetermined position has been achieved, whereby the workpiece 2 springs back. When the workpiece 2 has sprung back fully, or at least partially, the measurement is initiated in order to measure the actual angle at the workpiece 2. According to the preferred embodiment, the measurement arrangements 15.1, 15.2 run along the guides 14.1, 14.2 on the two sides of the moveable die 4. It is an advantage if the angle is measured at each adjustment means 10 that is located along the pressure table. The number of measurements depends on the length of the workpiece. The measurement is carried out at two locations if the length of the workpiece extends only across two adjustment means 10, while for longer workpieces the angle is measured in association with each adjustment means 10 along the complete length of the workpiece.

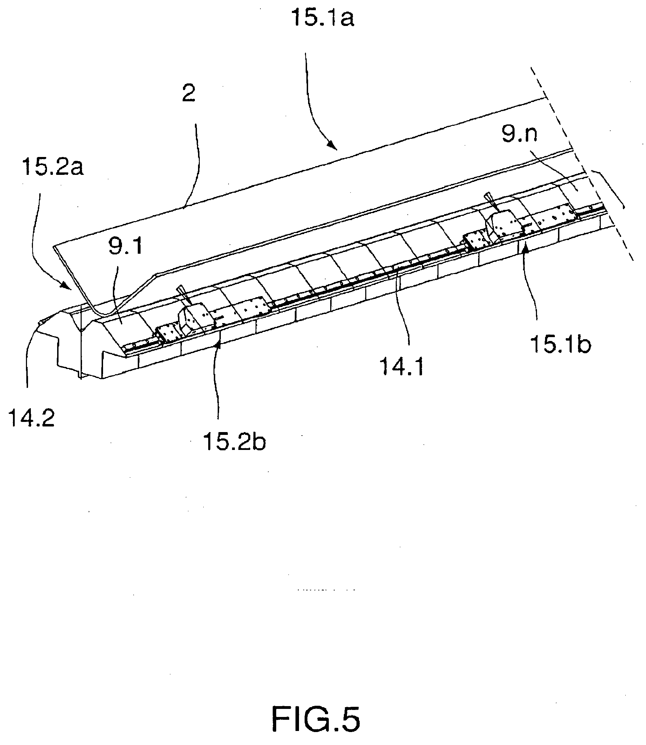

Two measurement arrangements 15.1 a, 15.1b and 15.2a, 15.2b are arranged in another embodiment on each side of the moveable die 4, or on each side of the pressure table 5 as is shown in Figure 5. One pair 15.1a-15.1b is located centrally when viewed along the longitudinal direction of the workpiece 2, and one pair 15.2a-15.2b is located at one end of the workpiece 2. When a measurement is to be carried out, the centrally located measurement arrangements and the measurement arrangements located at one end are caused to move at the same time. The measurement is ended when the central measurement arrangements 15.1 a-15.1 b reach the second end of the workpiece 2 and the second measurement arrangements 15.2a-15.2b reach the centre of the workpiece 2. The time required for the measurement is in this way halved.

When the curvature of the pressure table 5 has been adjusted on the basis of the angular values obtained, the moveable die 4 is moved in the direction towards the pressure table 5, whereby the workpiece 2 is bent a second time and acquires its final form, with an equal angle along the complete length of the workpiece 2. The moveable die 4 is then moved in the direction away from the pressure table 5, after which the workpiece 2 can be removed and a new workpiece placed onto the pressure table.

The present invention is not limited to what has been described above and shown in the drawings: it can be changed and modified in several different ways within the scope of the innovative concept defined by the attached patent claims.

## Claims

1. A method for the measurement of angles at a workpiece (2) during the bending of the workpiece (2) to a predetermined angle in a press brake (1), where the bending operation takes place between a moveable die (4) and a pressure table (5), comprising at least one measurement arrangement (15) that can be displaced along a guide (14) parallel to the workpiece (2) with a measurement head (18) intended for the measurement of the angle at the workpiece (2) after the bending operation, and adjustment means (10) for adjusting the curvature of the pressure table (5) towards or away from the movable die (4), wherein the process stages of the operation:
- that the moveable die (4) is displaced in the direction towards the workpiece (2),
- that the workpiece (2) is bent,
- that the moveable die (4) is displaced in the direction away from the workpiece (2),
**characterised in that** the at least one measurement arrangement (15) is caused to move along the guide (14), whereby
- several present values of the angle are measured continuously along the complete length of the workpiece (2), **in that**
- a target value of the angle at the workpiece (2) is measured at one position along the workpiece, **in that**
- the pressure table (5) is adjusted in those positions at which the present values of the angle at the workpiece (2) deviate from the target value of the angle at the workpiece, **in that**
- the moveable die (4) is displaced in the direction towards the workpiece, **in that** (2),
- the workpiece (2) is bent to its final form, and **in that**
- the moveable die (4) is displaced away from the workpiece (2).

2. The method according to claim 1, whereby the angle at the workpiece (2) is measured in association with at least two adjustment means (10) along the length of the workpiece (2).

3. The method according to claim 1, whereby the target value of the angle at the workpiece (2) is measured in association with the centre of the workpiece.

4. The method according to claim 1, whereby the target value and the present value of the angles at the workpiece (2) are transferred to a processing unit and converted to signals, on the basis of which the adjustment means (10) adjust the pressure table (5).

5. An arrangement for the measurement of angles at a workpiece (2) during the bending of the workpiece (2) to a predetermined angle in a press brake (1), where the bending operation takes place between a moveable die (4) and a pressure table (5), comprising at least one measurement arrangement (15) that can be displaced parallel to the workpiece (2) with a measurement head (18) intended for the measurement of the angle at the workpiece (2) after the bending operation, and adjustment means (10) for adjusting the curvature of the pressure table (5) towards or away from the movable die (4), and a guide (14) for the control of the measurement arrangements (15) is arranged parallel to the moveable die (4) along which guide the measurement arrangement (15) runs **characterised in that** the at least one measurement arrangement (15) is caused to move along the guide (14) during the measuring such that several present values of the angle are measured continuously along the complete length of the workpiece (2).

6. The arrangement according to claim 5, whereby the guide (14) is arranged in association with the pressure table (5) with the measurement arrangement (15) directed towards the moveable die (4).

7. The arrangement according to claim 5; whereby the guide (14) is arranged in association with the moveable die (4) with the measurement arrangement (15) directed towards the pressure table (5).

8. The arrangement according to any one of claims 5-7, whereby the pressure table (5) comprises several sections (9.1-9.n) that can be displaced relative to each other.

9. The arrangement according to claim 5, whereby guides (14a, 14b) are arranged on both sides of the moveable die (4) or the pressure table (5).

10. The arrangement according to claim 9, whereby measurement arrangements (15.1a, 15.1b, 15.2a, 15.2b) are arranged for each guide (14a, 14b).

11. A press brake (1) comprising an arrangement according to claim 5.

## Patentansprüche

1. Verfahren zur Messung von Winkeln an einem Werkstück (2) während des Biegens des Werkstücks (2) zu einem vorgegebenen Winkel in einer Biegepresse (1), wobei der Biegevorgang zwischen einem beweglichen Stempel (4) und einem Drucktisch (5) erfolgt, umfassend mindestens eine Messvorrichtung (15), die entlang einer Führung (14) parallel zum Werkstück (2) verschoben werden kann mit einem Messkopf (18) zum Messen des Winkels am Werkstück (2) nach dem Biegevorgang, und Einstellungsmittel (10) zum Einstellen der Krümmung des Drucktisches (5) in Richtung gegen oder weg von dem beweglichen Stempel (4), wobei die Verfahrensschritte des Vorgangs:
- dass der bewegliche Stempel (4) in Richtung gegen das Werkstück (2) verschoben wird,
- dass das Werkstück (2) gebogen wird,
- dass der bewegliche Stempel (4) in Richtung weg vom Werkstück (2) verschoben wird,
**dadurch gekennzeichnet, dass** die mindestens eine Messvorrichtung (15) dazu veranlasst wird, sich entlang der Führung (14) zu bewegen, wobei
- mehrere momentane Werte des Winkels kontinuierlich entlang der ganzen Länge des Werkstücks (2) gemessen werden, dass
- ein Zielwert des Winkels am Werkstück (2) in einer Position entlang des Werkstücks gemessen wird, dass
- der Drucktisch (5) in denjenigen Positionen verstellt wird, wo die momentanen Werte des Winkels am Werkstück (2) vom Zielwert des Winkels am Werkstück abweichen, dass
- der bewegliche Stempel (4) in Richtung gegen das Werkstück (2) verschoben wird,
- das Werkstück (2) zum seinem Endform gebogen wird, und dass
- der bewegliche Stempel (4) weg vom Werkstück (2) verschoben wird.

2. Verfahren nach Anspruch 1, wobei der Winkel am Werkstück (2) in Verbindung mit mindestens zwei Einstellungsmittel (10) entlang der Länge des Werkstücks (2) gemessen wird.

3. Verfahren nach Anspruch 1, wobei der Zielwert des Winkels am Werkstück (2) in Verbindung mit der Mitte des Werkstücks gemessen wird.

4. Verfahren nach Anspruch 1, wobei der Zielwert und der momentane Wert der Winkel am Werkstück (2) zu einer Verarbeitungseinheit übertragen werden und in Signale umgewandelt werden, auf Basis welcher die Einstellungsmittel (10) den Drucktisch einstellen (5).

5. Vorrichtung zur Messung von Winkeln an einem Werkstück (2) während des Biegens des Werkstücks (2) zu einem vorgegebenen Winkel in einer Biegepresse (1), wobei der Biegevorgang zwischen einem beweglichen Stempel (4) und einem Drucktisch (5) erfolgt, umfassend mindestens eine Messvorrichtung (15), die parallel zum Werkstück (2) verschoben werden kann mit einem Messkopf (18) zum Messen des Winkels am Werkstück (2) nach dem Biegevorgang, und Einstellungsmittel (10) zum Einstellen der Krümmung des Drucktisches (5) in Richtung gegen oder weg von dem beweglichen Stempel (4), und eine Führung (14) zur Steuerung der Messvorrichtungen (15) ist parallel zum beweglichen Stempel (4) angeordnet, wobei sich die Messvorrichtung (15) entlang der Führung erstreckt, **dadurch gekennzeichnet, dass** die zumindest eine Messvorrichtung (15) dazu veranlasst wird, sich entlang der Führung (14) während der Messung zu bewegen, so dass mehrere momentane Werte des Winkels kontinuierlich entlang der ganzen Länge des Werkstücks (2) gemessen werden.

6. Vorrichtung nach Anspruch 5, wobei die Führung (14) in Verbindung mit dem Drucktisch (5) angeordnet ist mit der Messvorrichtung (15) gegen den beweglichen Stempel (4) gerichtet.

7. Vorrichtung nach Anspruch 5, wobei die Führung (14) in Verbindung mit dem beweglichen Stempel (4) angeordnet ist mit der Messvorrichtung (15) gegen den Drucktisch (5) gerichtet.

8. Vorrichtung nach einem der Ansprüche 5-7, wobei der Drucktisch (5) mehrere Abschnitts (9.1-9.n) umfasst, die im Verhältnis zu einander verschoben werden können.

9. Vorrichtung nach Anspruch 5, wobei Führungen (14a, 14b) auf beiden Seiten des beweglichen Stempels (4) oder des Drucktischs (5) angeordnet sind.

10. Vorrichtung nach Anspruch 9, wobei es für jede Führung (14a, 14b) Messvorrichtungen (15.1 a, 15.1 b, 15.2a, 15.2b) angeordnet sind.

11. Biegepresse (1) umfassend eine Vorrichtung nach Anspruch 5.

## Revendications

1. Procédé pour la mesure des angles d'une pièce à travailler (2) au cours du pliage de la pièce à travailler (2) à un angle prédéterminé dans une presse-plieuse (1), l'opération de pliage étant réalisée entre un moule amovible (4) et une table à pression (5), comprenant au moins un agencement de mesure (15) qui peut être déplacé le long d'un guide (14) parallèle à la pièce à travailler (2) avec une tête de mesure (18) prévue pour la mesure de l'angle au niveau de la pièce à travailler (2) après l'opération de pliage, et un moyen d'ajustement (10) pour ajuster la courbure de la table à pression (5) vers le moule amovible (4) ou à l'écart de celui-ci, **caractérisé par** les étapes de procédé de l'opération suivantes :
- le moule amovible (4) est déplacé vers la pièce à travailler (2),
- la pièce à travailler (2) est pliée,
- le moule amovible (4) est déplacé dans la direction à l'écart de la pièce à travailler (2),
**caractérisé en ce que** l'au moins un agencement de mesure (15) est amené à se déplacer le long du guide (14), moyennant quoi
- plusieurs valeurs actuelles de l'angle sont mesurées en continu le long de la longueur complète de la pièce à travailler (2), **en ce que**
- une valeur cible de l'angle de la pièce à travailler (2) est mesurée au niveau d'une position le long de la pièce à travailler, **en ce que**
- la table à pression (5) est ajustée dans ces positions auxquelles les valeurs actuelles de l'angle de la pièce à travailler (2) dévient de la valeur cible de l'angle au niveau de la pièce à travailler, **en ce que**
- le moule amovible (4) est déplacé dans la direction vers la pièce à travailler (2), **en ce que**
- la pièce à travailler (2) est pliée en sa forme finale, et **en ce que**
- le moule amovible (4) est déplacé à l'écart de la pièce à travailler (2).

2. Procédé selon la revendication 1, selon lequel l'angle au niveau de la pièce à travailler (2) est mesuré en association avec au moins deux moyens d'ajustement (10) le long de la longueur de la pièce à travailler (2).

3. Procédé de la revendication 1, par lequel la valeur cible de l'angle de la pièce à travailler (2) est mesurée en association avec le centre de la pièce à travailler.

4. Procédé de la revendication 1, selon lequel la valeur cible et la valeur actuelle des angles au niveau de la pièce à travailler (2) sont transférées vers une unité de traitement et converties en signaux, sur la base desquels le moyen d'ajustement (10) ajuste la table à pression (5).

5. Agencement permettant la mesure des angles au niveau d'une pièce à travailler (2) pendant le pliage de la pièce à travailler (2) à un angle prédéterminé dans une presse-plieuse (1), l'opération de pliage étant réalisé entre un moule amovible (4) et la table à pression (5), comprenant au moins un agencement de mesure (15) qui peut être déplacé en parallèle à la pièce à travailler (2) avec une tête de mesure (18) prévue pour la mesure de l'angle de la pièce à travailler (2) après l'opération de pliage, et un moyen d'ajustement (10) pour ajuster la courbure de la table à pression (5) vers le moule amovible (4) et en s'éloignant de celui-ci et un guide (14) pour la commande des agencements de mesure (15) est placé en parallèle au moule amovible (4) le long duquel s'étend le guide d'agencement de mesure (15), **caractérisé en ce qu**'au moins un agencement de mesure (15) est amené à se déplacer le long du guide (14) au cours de la mesure de sorte que plusieurs valeurs actuelles sont continuellement mesurées le long de la longueur complète de la pièce à travailler (2).

6. Agencement selon la revendication 5, selon lequel le guide (14) est agencé en association à une table à pression (5), l'agencement de mesure (15) étant orienté vers le moule amovible (4).

7. Agencement selon la revendication 5, selon lequel le guide (14) est agencé en association avec un moule amovible (4), l'agencement de mesure (15) étant orienté vers la table à pression (5).

8. Agencement selon l'une quelconque des revendications 5 à 7, selon lequel la table à pression (5) comprend plusieurs sections (9.1-9.n) qui peuvent être déplacées les unes par rapport aux autres.

9. Agencement selon la revendication 5, selon lequel les guides (14a, 14b) sont agencés de part et d'autre du moule amovible (4) ou de la table à pression (5).

10. Agencement selon la revendication 9, par lequel les agencements de mesure (15.1a, 15.1b, 15.2a, 15.2b) sont placés pour chaque guide (14a, 14b).

11. Presse-plieuse (1) comprenant un agencement selon la revendication 5.
